# EUROPEAN PATENT APPLICATION

(11) **EP 4 358 643 A1**
(43) Date of publication of application: **24.04.2024**
(21) Application number: 22202760.9
(22) Date of filing: 20.10.2022
(51) Int. Cl.: H04W 92/02, H04W 76/12, H04L 12/46, H04W 88/14, H04L 45/42

(54) **METHOD FOR COMMUNICATING BETWEEN TWO MICRO-NETS**

(71) Applicant: Siemens Aktiengesellschaft, 80333 München (DE)
(72) Inventor: Fiorentino, Vincenzo, 90491 Nürnberg (DE)
(74) Representative: Siemens Patent Attorneys

(57) **Abstract**

The current disclosure describes a method of communicating with a first user equipment of a first micro-net. The method comprises receives one or more packets from the second user equipment associated with the second micro-net and transmitting the one or more packets to a first user plane function of the first micro-net, wherein the first user plane function is configured to transmit the one or more packets to the first user equipment of the first micro net based on the destination information of the one or more packets. The second user plane function is connected to the first user plane function via a first pair of first dedicated user equipment and first radio unit and a second pair of second dedicated user equipment and second radio unit.

## Description

### Background:

The current disclosure relates to wireless communication networks in industrial automation environments including substation automation and process automation, and more particularly to network functions of the wireless communication networks. With the advent of 4G EPC and 5G communication technology, most cellular networks include a central network core which includes a plurality of software based network functions which regulate and manage various aspects of the wireless communication network. Additionally, such networks may comprise micro-nets for enabling faster communication.

### Description:

The current disclosure relates to wireless communication networks in industrial facilities and industrial automation environments. Wireless communication networks deployed in such facilities often need to such mission critical applications like fault location and service restoration, etc., and accordingly must guarantee ultra-low latency communication. This is can often be difficult or challenging since radio units of the distributed base stations are often present in locations several kilometers away from the central unit of the distributed base station and the central network core of the wireless communication network. Communication between end devices present in different locations often require a communication loop including the central network core. For example, for a user device for communicating to another user device, both the user devices must undergo the authentication procedure. Conventionally, the first user device (responsible for send a message to the second user device), starts the authentication procedure and once the first user device is authenticated, a data message is sent from the first user device to the second user device via the network core. Then, the network core will page the second user device and starts the authentication also on the terminating side. Subsequent to the authentication of second user device, the message is passed to the second user device. Accordingly, such communication may suffer from significant end to end latency. For example, average latency for the registration is usually about 168ms, which does not meet the latency requirements of the mission critical use cases (often about 10ms).

One approach to address such issues is by the use of micro-nets. Micro-networks can operate and communicate to each other independently from the central core network, by replicating parts of the network functions present at the central core, at the distributed unit present in the corresponding micro net. Conventionally, each micro-net is connected other micro-nets via wired network, for communicating to other micro-nets. However, such wired network deployment, especially in remote locations or offshore, is often expensive and time consuming. Accordingly, there is a need for a flexible method for enabling communication amongst the micro-nets.

Accordingly, the current disclosure describes a method of communicating with a first user equipment of a first micro-net. The method is implemented by user plane function of a second micro-net. The method comprises receives one or more packets from the second user equipment associated with the second micro-net, wherein the one or more packets include a destination information associated with the first user equipment of the first micro-net; and transmitting the one or more packets to a first user plane function of the first micro-net, wherein the first user plane function is configured to transmit the one or more packets to the first user equipment of the first micro net based on the destination information of the one or more packets. The second user plane function is communicatively connected to the first user plane function via a first pair of first dedicated user equipment and first radio unit and a second pair of second dedicated user equipment and second radio unit. The one or more packets are transmitted from the second user plane function to the first user plane function via the second dedicated user equipment from the second pair of second dedicated user equipment and second radio unit and the first radio unit from the first pair of first dedicated user equipment and first radio unit.

Accordingly, the current disclosure describes a method in which connection between two micro nets is established using two pairs of dedicated user equipment and radio units. Accordingly, the current disclosure introduces a point to point radio link to interconnect two micro-nets by re-using part of the network equipment like Radio Units (RU) and User Equipment (UE) MIMO layers. Using the dedicate user equipment and the radio units, wireless connection may be provided between the micro-nets. Moreover, using the dedicated user equipment, each micro-net is abstracted from the other micro-net and therefore allowing for deployment of the current solution without significant efforts in relation to configuration. Moreover, this further creates a redundant radio link which increases the reliability of the whole radio network.

In an embodiment, the dedicated first user equipment is dedicated to the second user plane function and is for transmitting data from the first user plane function and wherein the dedicated second user equipment is dedicated to the first user plane function and is for transmitting data from the second user plane function. In an embodiment, the second radio unit is dedicated to the second user plane function and is for receiving data to the first user plane function and wherein the first radio unit is dedicated to the first user plane function and is for receiving data to the second user plane function. Accordingly, by having dedicated user equipment and radio units, a proper communication channel is established between the first and second micro-nets.

In an embodiment, the dedicated first user equipment is registered with the first micro-net and wherein the dedicated second user equipment is registered with the second micro-net. Accordingly, the first dedicated user equipment abstracts the second micro net from the first user plane functions and wherein the second dedicated user equipment abstracts the first micro net from the second user plane function. This allows for easy deployment of the proposed solution in existing networks without requiring significant configuration.

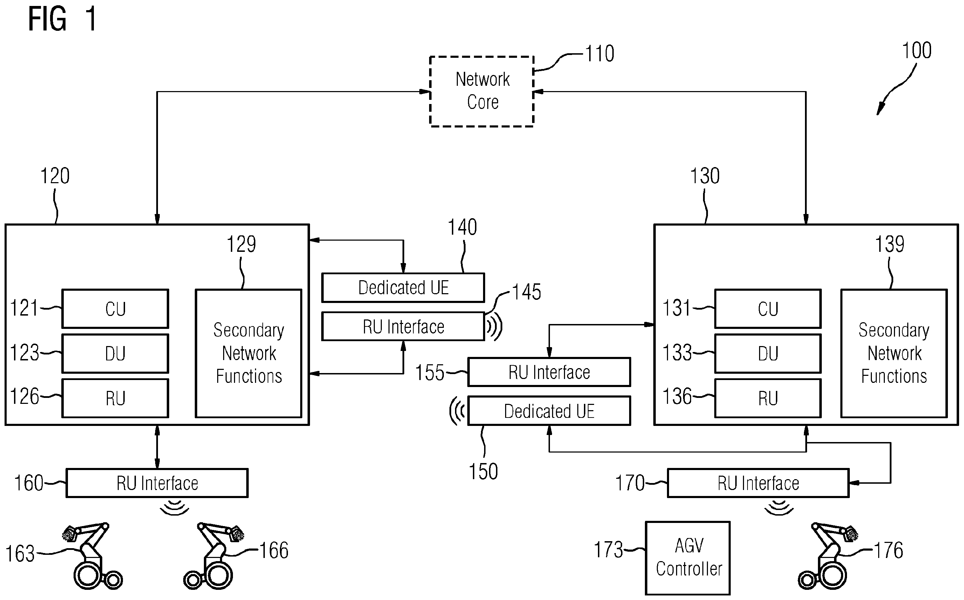

In another aspect, the current disclosure describes a network device for communicating with a first user equipment of a first micro-net. The network device comprises a first network interface connected to a second user equipment of a second micro-net, a second network interface connected to at least one of a of second radio unit and a dedicated first user equipment; and one or more processors connected to a memory module. The one or more processors are configured to receive one or more packets from the second user equipment associated with the second micro-net via the first network interface, wherein the one or more packets include a destination information associated with the first user equipment of the first micro-net; and transmit the one or more packets to a first user plane function of the first micro-net via the dedicated first user equipment, wherein the first user plane function is configured to transmit the one or more packets to the first user equipment of the first micro net based on the destination information of the one or more packets. In yet another aspect, the current disclosure describes to a non transitory storage medium. The non transitory storage medium comprises a plurality of instructions, which when executed on one or more processors, cause the one or more processors to receive one or more packets from a second user equipment associated with the second micro-net via a first network interface, wherein the one or more packets include a destination information associated with a first user equipment of a first micro-net; and transmit the one or more packets to a first user plane function of the first micro-net via a dedicated first user equipment, wherein the first user plane function is configured to transmit the one or more packets to the first user equipment of the first micro net based on the destination information of the one or more packets. These aspects are further explained in reference to figures 1-3.
Figure 1 illustrates an example section of a wireless communication network in an industrial facility comprising two micro-nets;
Figure 2 illustrates a method of communicating with a first user equipment of a first micro-net by a user plane function of a second micro-net;
Figure 3 illustrates an example network device for communicating with a first user equipment of a first micro-net.

Figure 1 illustrates a section 100 of the wireless communication network in an industrial facility for connecting a plurality of industrial devices with each other. Industrial facility herein refers to any environment where one or more industrial processes such as manufacturing, refining, smelting, or assembly of equipment, generation, transmission or distribution of electricity, transportation, may take place. This includes process plants, oil refineries, automobile factories, power plants, smart grids, electrical substations, storehouses, etc. The plurality of industrial process and operations may be carried out in production cells using a plurality of devices such as control devices, field devices, mobile devices, etc., present with the corresponding production cell. The control devices include process controllers, programmable logic controllers, supervisory controllers, automated guided vehicles, robots, operator devices, etc. One or more control devices are connected to a plurality of field devices (not shown in figure) such as actuators and sensor devices for monitoring and controlling various industrial processes in the industrial facility. These field devices can include flowmeters, value actuators, temperature sensors, pressure sensors, etc. Additionally, the industrial facility includes a plurality of mobile devices (also referred to as mobile network devices) including one or more robots for performing a plurality of operations such as welding, assembly of parts; one or more autonomous guided vehicles for transportation and handling of material; one or more assets with RFID tags on conveyor belts, etc. in the industrial facility. Additionally, the industrial facility may include an operator station for displaying the status of the industrial facility to an operator and for allowing the operator to define KPIs for the control of the industrial processes in the facility. All the industrial devices may be connected to each other via a plant network (realized via wired and wireless technologies).

Communication in the above-mentioned plant network happens through wired and wireless means or technologies. Accordingly, the industrial facility utilizes the wireless communication network for enabling communication amongst the various devices of the industrial facility. The wireless communication network is based on cellular technology and comprises a plurality of gateway devices or network devices. Gateway devices herein refers to one or more devices capable of connecting the user devices to the wireless network. Examples of gateway devices include base stations, routers, switches, relays, access points, etc. The plurality of gateway devices may include stationary gateway devices which may be affixed to a plurality of locations in the industrial facility. A plurality of the industrial devices in the facility are connected to one or more gateway devices to connect to the wireless network and for communicating information with the other devices and systems in the industrial facility. The industrial devices include one or more industrial applications which are capable of processing data from other industrial devices.

The wireless communication network includes a network core 110 which includes a plurality of network functions such as user plane function (UPF), authentication server function (AUSF), access and mobility function (AMF), session management function (SMF), network exposure function (NEF) etc. Network function herein refers to software module responsible for realizing and managing as certain network aspect in relation to the wireless communication network. For the AUSF provides an authentication service for the devices connected to the wireless communication network. Similarly, the UPF User plane function (UPF) supports packet routing & forwarding, packet inspection, QoS handling, etc. Network functions and their related functions are known in the state of the art and have a similar meaning as conventionally known. Network function herein refers to software module or executable code responsible for realizing and managing as certain network aspect in relation to the wireless communication network. In 5G, the network functions are software modules separate from the hardware and may be executed on any network node. Each virtual function can be deployed on separate machine or even in cloud. Network functions and their related functions are known in the state of the art and have a similar meaning as conventionally known. For the AUSF provides an authentication service for the devices connected to the wireless communication network. Similarly, the UPF User plane function (UPF) supports packet routing & forwarding, packet inspection, QoS handling, etc. Similarly, the Unified Data Management (UDM) network function is responsible for generation of credentials, user identification, access authorization, and subscription management. Similarly, the Access and Mobility Function (AMF) is responsible for manages connection and mobility and includes a Globally Unique AMF Identifier (GUAMI) that is used to identify an AMF Instance within a 5G Network.

The network core 110 is connected to a plurality of micro-nets (120 and 130). Each micro-net includes at least one distributed base station comprising a radio unit (126, 136), a distributed unit (123, 133) and a central unit (121, 131). The distributed base station may be regarded as a gateway device. The radio unit (126,136) is connected to a plurality of radio sub-units or interfaces (shown as radio sub-units 160 and 145, and radio sub-units 150 and 136). The conventional functions/responsibilities of the central unit, and the distributed unit depends on the Split Option utilized in the implementation of the distributed base station. The industrial devices (163 and 166, and 173 and 176) are connected to the wireless communication network using the distributed base stations.

Additionally, each micro-net includes one or more secondary network functions (129 and 139) which are capable of coordinating with the network functions of the network core 110 for managing the industrial devices connected to the corresponding micro-net. The one or more secondary network functions (129 and 139) are similar to the one or more network functions of the network core. The one or more secondary network functions are associated with admission control and authentication of the industrial devices, management of user plane and sessions related to connections associated with the industrial devices in the corresponding micro-net.

The one or more network functions of the network core are configured to forward network configurations and control information associated with one or more user devices connected to a micro-net, to the one or more corresponding secondary network functions of the micro-net. Based on the received network configurations and control information associated with one or more user devices, the one or more secondary network functions are configured to manage the user devices of the micro-net. The secondary network functions are installed in a network device associated with the corresponding micro-net as software modules and manage the control plane and the user plane of the corresponding micro-net.

In an example, the one or more secondary network functions includes a network exposure function (NEF), a session management function (SMF), authentication server function (AUSF), unified data management function (UDM), user plane function (UPF), etc. The network exposure function from the one or more secondary functions acts as an interface between the network functions of the network core and the other secondary network functions, is used to configure the local core functions and report local information to the network core. Similarly, a specialized application network function (AF) is implemented in the network core to coordinate with the one or more secondary network functions. For example, for establishing a PDU session between the micro-net and the user plane function of the network core, the coordination between the local SMF of the one or more secondary network functions and the SMF of the network core happens via the local NEF of the one or more secondary network functions and the application function. Additionally, the application network function is responsible for transferring user information, security information and network configuration and policies between the network core and the one or more secondary network functions. The application network function also retrieves performance and maintenance data from the one or more secondary network functions.

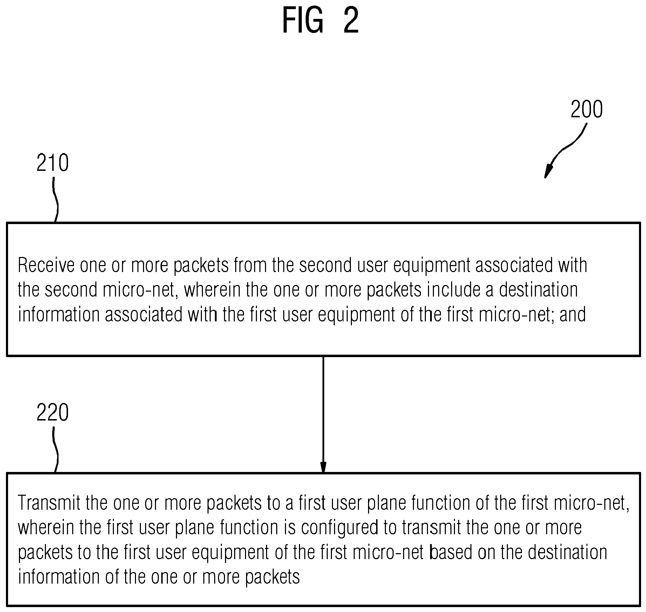

Additionally, to enable communicate between the micro-nets without utilising the network core 110, each micro-net includes a dedicated user equipment and a dedicated radio interface. For example, as shown in figure 1, the micro-net 120 includes a dedicated user equipment 140 and a dedicated radio interface 145. Similarly, the micro-net 130 includes a dedicated user equipment 150 and a dedicated radio interface 155. The dedicated radio interfaces are connected to the corresponding radio unit of the corresponding micro-net and are providing radio coverage to a dedicated user equipment associated with the other micro-net. Specifically, the dedicated radio interfaces can be RX/TX chain of the corresponding radio units, dedicated to communicate to the dedicated User Equipment connected to another Micro-net. Using the pairs of dedicated radio interfaces and user equipment, the micro-nets are capable of communicating with each other. This is further explained in reference to figure 2.

Figure 2 illustrates a method 200 of communicating with a first user equipment 163 of a first micro-net 120. In an example, the method 200 is realized by user plane function of a second micro-net 130. In an example, the first user equipment 163 is located on a automated guidance vehicle or a robot.

At step 210, the user plane function (one of the secondary network functions 139) receives one or more packets from the second user equipment (for providing wireless connectivity to an AGV controller 173) associated with the second micro-net 130. The one or more packets include a destination information associated with the first user equipment 163 of the first micro-net 120.

For example, the AGV controller 173 in the second micro-net is responsible for communicating with the automated guidance vehicle 163 in the first micro-net, controlling the automated guidance vehicle 163. Accordingly, the one or more packets from the AGV controller 173 may include route and task information associated with the automated guidance vehicle 163. Accordingly, to communicate with the automated guidance vehicle 163, the AGV controller transmits packets to the second user plane function of the second micro-net via the radio interface 170 (which in turn is connected to the distributed base station containing the radio unit 136, distributed unit 133 and the central unit 131, connected to the second user plane function).

Since the packets from the AGV controller 173 contain the address of the AGV 163 as the destination address, the second user plane function determines that the AGV 163 is connected to the first micro-net and accordingly, proceeds to connect to the first micro-net to transmit the packets.

At step 220, the second user plane function transmits the one or more packets to a first user plane function (of the secondary network functions 129) of the first micro-net 120, wherein the first user plane function is configured to transmit the one or more packets to the first user equipment 163 of the first micro net 120 based on the destination information of the one or more packets.

The second user plane function is communicatively connected to the first user plane function via a first pair of first dedicated user equipment 140 and first radio unit 145 and a second pair of second dedicated user equipment 150 and second radio unit 155. The dedicated user equipment and dedicated radio interfaces act as a dedicated channel between the first and second micro-nets and ensure connectivity between them. The dedicated user equipment are used for transmitting data from the corresponding micro-net (i.e. the micro-net to which they are dedicated to) to the other micro-net. Similarly, the dedicated radio interfaces are coupled to the corresponding micro-nets for receiving data from the associated user equipment. Accordingly, each radio interface is associated with a corresponding user equipment (for reception and transmission respectively). For example, as shown in the figure, the dedicated user interface 140 is dedicated to the micro-net 120, and the dedicated user equipment 150 is dedicated to the micro-net 130. Similarly, the radio unit interface 145 is dedicated to the micro-net 120 and the radio unit interface 155 is dedicated to the micro-net 130. Additionally, the dedicated user equipment 140 is coupled to the radio unit interface 155 (for transmission and reception respectively) and similarly, the dedicated user interface 150 is coupled to the radio unit interface 145 (for transmission and reception respectively). Accordingly, the one or more packets are transmitted from the second user plane function to the first user plane function via the second dedicated user equipment 150 to the first radio unit 145.

Accordingly, connection between the micro-nets are provided by using the dedicated user equipment and the radio unit interfaces, without including the network core.

In an example, the dedicated user equipment 150 is registered with the first user plane function and wherein the dedicated user equipment 140 is registered with the second user plane function. Registration herein refers that the dedicated user equipment is a subscriber of the micro-net and when switched on, the dedicated user equipment is registered with the network functions of the corresponding micro-net and is managed by the registered micro-net. Accordingly, the micro-net (to which the dedicated user equipment is registered) treats the dedicated user equipment similar to the other user equipment such despite the user equipment being located in the physical region of the other micro-net and connected to its user plane function.

Accordingly, the first dedicated user equipment 140 abstracts the second micro net 130 from the first user plane function of the first micro-net 120. Similarly, the second dedicated user equipment 50 abstracts the first micro net 120 from the second user plane function of the second micro-net 130.

In addition to allowing for communication between micro-nets, the above mentioned network infrastructure may be utilized in improving redundancy and reliability in network communications. For example, when three or more micro-nets are interconnected using the dedicated pairs of user equipment and radio unit interfaces, two network paths exist between each micro-net and the other micro-net (a direct connection and an indirect connection via the third micro-net). For example, when there are three micro-nets (A,B,C), and each of them are interconnected, there exists two network paths between micro-net A and B (a direct connection between A and B, and an indirect connection via micro-net C). Accordingly, using such interconnected micro-nets, packets may be broadcast over the multiple network paths.

For example, the dedicated user equipment and radio unit interfaces may be equipped with duplication and de-duplication modules, for implementing packet redundancy protocols such as parallel redundancy protocol (PRP). Such modules may be implemented in link layer of the dedicated user equipment and the radio unit interfaces. For example, a user equipment in a micro-net A, may intend to transmit packets to a user equipment in micro-net B. Accordingly, the dedicated user equipment associated with the micro-net A duplicates the packets and sends a first set of packets to the radio unit interfaces associated with micro-net B and micro-net C. The radio interface unit of the micro-net C forwards the packets to the user plane function of the micro-net C which utilizes the dedicated user equipment associated with the micro-net C to forward the packets to the radio unit interface of the micro-net B. Accordingly, the radio interface associated with the micro-net B receives two copies of the packets (one from micro-net A and one from micro-net C). Then, the radio unit interface of the micro-net C eliminates one of the copies and forwards one copy to the user plane function of the micro-net C, which sends it to the intended user equipment in micro-net C. In case the direct link (A-B) fails for any reasons the communication will be maintained over the link A-C-B, although extra latency will be introduced.

Accordingly, redundancy and reliability is improved in the network infrastructure by using the connections between the micro-nets. Additionally, such connections may be used in broadcast and multicast communications as known to a person skilled in the art.

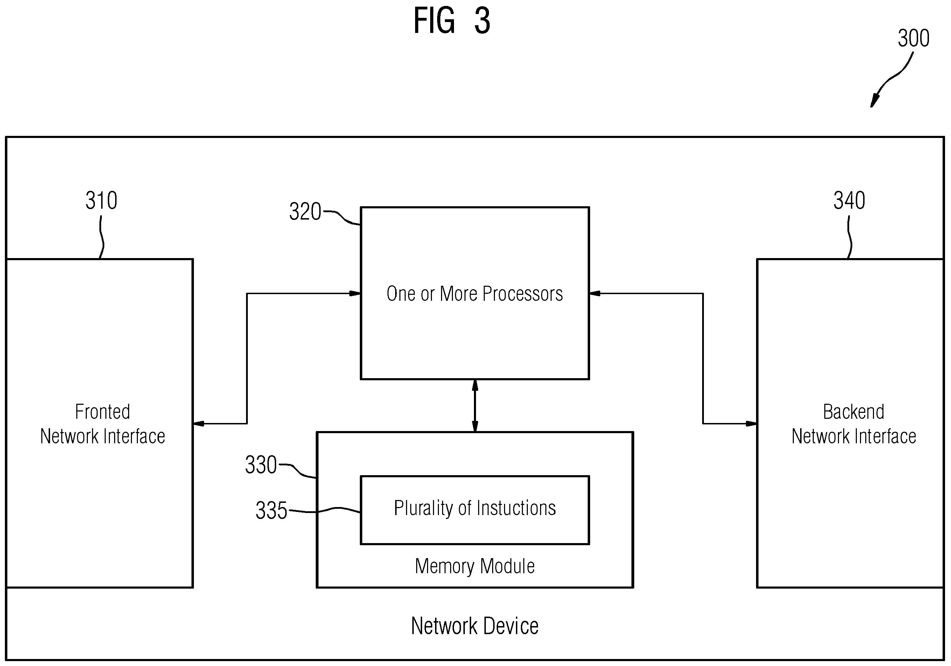

While the current disclosure has been described in relation to a single network device with one or more secondary network functions, a plurality of such network devices may be used in the industrial facility. Accordingly, such network devices with their micro-networks can communicate with each other without looping the central network core. This is further explained in relation to figure 3.

Accordingly, the current disclosure describes a network device 300 for communicating with a first user equipment of a first micro-net. The network device 300 comprises a first network interface 310 connected to a second user equipment of a second micro-net, and a second network interface 340 connected to at least one of a of second radio unit and a dedicated first user equipment. The network device 300 further includes one or more processors 320 connected to a memory module 330. The memory module 330 includes a plurality of instructions 335, which when executed, cause the one or more processors 330 configured to receive one or more packets from the second user equipment associated with the second micro-net via the first network interface 310, wherein the one or more packets include a destination information associated with the first user equipment of the first micro-net; and transmit the one or more packets to a first user plane function of the first micro-net via the dedicated first user equipment, wherein the first user plane function is configured to transmit the one or more packets to the first user equipment of the first micro net based on the destination information of the one or more packets.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. A method of communicating with a first user equipment of a first micro-net, the method, by user plane function of a second micro-net, comprising:
a. receiving one or more packets from the second user equipment associated with the second micro-net, wherein the one or more packets include a destination information associated with the first user equipment of the first micro-net; and
b. transmitting the one or more packets to a first user plane function of the first micro-net, wherein the first user plane function is configured to transmit the one or more packets to the first user equipment of the first micro net based on the destination information of the one or more packets;
wherein the second user plane function is communicatively connected to the first user plane function via a first pair of first dedicated user equipment and first radio unit and a second pair of second dedicated user equipment and second radio unit, and
wherein the one or more packets are transmitted from the second user plane function to the first user plane function via the second dedicated user equipment from the second pair of second dedicated user equipment and second radio unit and the first radio unit from the first pair of first dedicated user equipment and first radio unit.

2. The method as claimed in claim 1, wherein the dedicated first user equipment is dedicated to the second user plane function and is for transmitting data to the first user plane function and wherein the dedicated second user equipment is dedicated to the first user plane function and is for transmitting data to the second user plane function.

3. The method as claimed in claim 1, wherein the second radio unit is dedicated to the second user plane function and is for receiving data from the first user plane function and wherein the first radio unit is dedicated to the first user plane function and is for receiving data from the second user plane function.

4. The method as claimed in claim 1, wherein the dedicated first user equipment is registered with the second user plane function and wherein the dedicated second user equipment is registered with the first user plane function.

5. The method as claimed in claim 1, wherein the first dedicated user equipment abstracts the second micro net from the first user plane functions and wherein the second dedicated user equipment abstracts the first micro net from the second user plane function.

6. A network device for communicating with a first user equipment of a first micro-net, the network device comprising:
a. a first network interface connected to a second user equipment of a second micro-net;
b. a second network interface connected to at least one of a of second radio unit and a dedicated first user equipment; and
c. one or more processors connected to a memory module, the one or more processors configured to:
i. receive one or more packets from the second user equipment associated with the second micro-net via the first network interface, wherein the one or more packets include a destination information associated with the first user equipment of the first micro-net; and
ii. transmit the one or more packets to a first user plane function of the first micro-net via the dedicated first user equipment, wherein the first user plane function is configured to transmit the one or more packets to the first user equipment of the first micro net based on the destination information of the one or more packets.

7. A non transitory storage medium comprising a plurality of instructions, which when executed on one or more processors, cause the one or more processors to:
a. receive one or more packets from a second user equipment associated with the second micro-net via a first network interface, wherein the one or more packets include a destination information associated with a first user equipment of a first micro-net; and
b. transmit the one or more packets to a first user plane function of the first micro-net via a dedicated first user equipment, wherein the first user plane function is configured to transmit the one or more packets to the first user equipment of the first micro net based on the destination information of the one or more packets.
